# EUROPEAN PATENT APPLICATION

(11) **EP 4 807 476 A1**
(43) Date of publication of application: **16.09.2026**
(21) Application number: 26163057.8
(22) Date of filing: 06.03.2026
(51) Int. Cl.: G05B 23/02

(54) **SYSTEM AND METHOD FOR CONDITIONAL PREDICTIVE MAINTENANCE USING SURROGATE MODELING**

(30) Priority: 07.03.2025 US 202519073373
(71) Applicant: The Boeing Company, Arlington, VA 22202 (US)
(72) Inventor: PROTSKO, Oleksandr, Seattle, WA (US); JOJIC, Ivana, Bellevue, WA (US)
(74) Representative: Plasseraud IP

(57) **Abstract**

A method (500) for conditional predictive maintenance in aircraft systems (100) using machine learning-based surrogate models (210) is disclosed. The described method (500) addresses the challenge of accurately detecting anomalies and predicting maintenance needs amidst complex operational and environmental variables. The method (500) involves receiving operational data from aircraft sensors (102), aircraft devices (104), and/or a memory (212), training a surrogate model (210) to predict aircraft device operations, and predicting operational outputs. Deviations (406) between predicted and actual outputs (400, 402) are analyzed to identify potential anomalies, distinguishing between noise and actual faults. This approach enables real-time monitoring and proactive maintenance scheduling, reducing reliance on scheduled inspections and enhancing aircraft reliability. The system (100) is adaptable to various environmental conditions and operational modes, ensuring consistent performance across different flight profiles. This method (500) is particularly useful for improving the efficiency and accuracy of aircraft maintenance operations.

## Description

### BACKGROUND

### FIELD OF THE DISCLOSURE

The present disclosure relates to conditional predictive maintenance technologies, specifically to the use of machine learning-based surrogate models for anomaly detection and prognostics in complex systems such as aircraft.

### DESCRIPTION OF THE ART

In conditional predictive maintenance for complex systems such as aircraft, one challenge lies in accurately detecting anomalies and predicting maintenance needs among a multitude of operational and environmental variables. Traditional methods often rely on physics-based models or statistical analyses, which can be computationally intensive and may not effectively handle the complexity and variability present in real-world operations. These approaches typically require extensive engineering hypotheses and detective work to identify relevant signal features, which can be time-consuming and may not adapt well to the dynamic conditions experienced by aircraft.

Moreover, existing solutions often struggle with the noise in data generated by varying operational conditions, such as changes in altitude, speed, and environmental factors like temperature and humidity. This noise can obscure important signal features that might indicate impending faults or failures, leading to missed maintenance opportunities or false alarms. As a result, there is a pressing need for more efficient and adaptable methods that can leverage the vast amounts of telemetry data available to predict system behavior and maintenance needs with greater accuracy and less computational overhead.

### BRIEF SUMMARY

In one example, a method for conditional predictive maintenance in aircraft systems using machine learning-based surrogate models is provided. The method involves receiving operational data from sensors or aircraft devices on an aircraft, which includes operational parameters used by aircraft devices for operational functions. A surrogate model is trained to process additional operational data to predict the operational outputs of the device or another device. The predicted outputs are then compared with the actual operational outputs from the device to identify any deviations, which may indicate a potential anomaly or fault. The method further involves determining whether the identified deviations are indicative of a maintenance need by analyzing them in the context of environmental and operational variations to distinguish between noise and actual anomalies. If the deviations are determined to indicate a maintenance need, a maintenance alert is generated to prompt the scheduling of maintenance activities for the affected aircraft devices.

In another example, a conditional predictive maintenance system for aircraft systems using machine learning-based surrogate models is provided. This system comprises sensors configured to collect operational parameters used by aircraft devices for their operational functions. It includes a processing unit with several modules: a training module that receives the operational parameters or data from the sensors and/or aircraft devices and trains a surrogate model; a comparison module that compares the predicted operational outputs from the surrogate model with the actual outputs from the device to identify deviations; an identification module that determines whether the identified deviations indicate a maintenance need by analyzing them in the context of environmental and operational variations; and an integration module that generates a maintenance alert if the deviations are determined to indicate a maintenance need, prompting the scheduling of maintenance activities for the affected devices. In one example, the data used to train the can be obtained or collected by the sensors during flights having no failures of components or systems onboard the aircraft. For example, the model can be trained on normal flights with no anomalies involving any components of the aircraft.

In another example, a conditional predictive maintenance system for an aircraft is provided. The system includes a machine learning-based surrogate model system configured to receive operational data from aircraft sensors. This data includes parameters such as temperature, pressure, altitude, and mass flow. The surrogate model system is trained to mimic the operation of aircraft devices and is further configured to process the operational data to predict maintenance needs by identifying anomalies and deviations from expected operational behavior. The system is designed to handle noisy data and distinguish between actual anomalies and environmental noise. It is trained to be robust against variations in environmental conditions and operational modes, providing consistent anomaly detection across different flight profiles and conditions. Additionally, an integration module is configured to interface the surrogate model system with existing aircraft systems to provide predictions and alerts for maintenance needs, facilitating proactive maintenance scheduling and reducing the likelihood of system failures.

### BRIEF DESCRIPTION OF THE DRAWINGS

Figure 1 illustrates one example of a conditional predictive maintenance system.
Figure 2 illustrates one example of a processing unit of the conditional predictive maintenance system.
Figure 3 illustrates examples of predicted operational outputs of different devices onboard an aircraft and actual operational outputs of the same devices.
Figure 4 illustrates one example of the conditional predictive maintenance system monitoring predicted and actual outputs of a device to predict an upcoming fault or anomaly of the device.
Figure 5 illustrates a flowchart of one example of a method of identifying deviations in operation of a device of an aircraft using a surrogate model of the device.

### DETAILED DESCRIPTION

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

In the realm of aircraft maintenance, conditional predictive maintenance has emerged as an approach to ensuring the reliability and safety of aircraft systems. Traditional methods of maintenance often rely on scheduled inspections and reactive repairs, which can lead to failures and costly downtime. These conventional approaches are typically based on historical data and predefined maintenance schedules, which may not accurately reflect the current state of an aircraft's systems. As a result, there is a growing need for more advanced techniques that can predict potential failures before they occur, allowing for timely interventions and minimizing operational disruptions.

Existing solutions in conditional predictive maintenance often utilize physics-based models or simple statistical methods to analyze operational data from aircraft systems. As used herein, the operational data can be data collected or output by sensors, and/or can include could be aircraft component position commands, such as flap settings, system states, component (e.g. valve) states, component position commands or position indications (which could be output from sensors, but may be output by other devices or components), component power commands, etc. While these methods can provide some insights into system performance, they are limited by their reliance on predefined models and assumptions about system behavior. Physics-based models, for instance, are computationally intensive and require extensive validation, making them impractical for some applications. Additionally, these models may not account for the complex interactions between various operational and environmental factors that can influence system performance. As a result, they may fail to detect subtle anomalies or trends that could indicate an impending failure.

The present method addresses these challenges by introducing a technique for conditional predictive maintenance in aircraft systems using machine learning-based surrogate models. This approach leverages advanced machine learning techniques to create surrogate models to predict operational outputs and identify deviations that may indicate potential anomalies or faults. Unlike traditional methods, the surrogate models are trained on actual operational data, allowing them to learn the complex relationships between various parameters and system states. This enables the models to provide accurate predictions even in the presence of noisy data and varying environmental conditions, thereby enhancing the reliability and efficiency of aircraft maintenance operations. The operational data can be processed in real-time or near real-time (e.g., to identify faults or trends toward failure for aircraft devices during flight) and/or saved into a memory and later processed to predict faults, failures, or trends toward faults or failures in aircraft devices (e.g., days or weeks ahead of actual failure).

The method for conditional predictive maintenance in aircraft systems using machine learning-based surrogate models introduces a novel approach to anomaly detection and maintenance scheduling. By receiving operational data from aircraft sensors and/or aircraft devices, the method leverages machine learning to train a surrogate model that processes additional operational data to predict operational outputs, allowing for a comparison between predicted and actual outputs to identify deviations. These deviations, when analyzed in the context of environmental and operational variations, help distinguish between noise and actual anomalies, thus indicating potential maintenance needs.

This approach offers several advantages over traditional methods. Firstly, the method allows for real-time monitoring and prediction of device performance, reducing the reliance on scheduled maintenance and enabling more efficient, condition-based maintenance. The surrogate model's ability to handle noisy data and distinguish between environmental noise and actual anomalies ensures more accurate predictions, minimizing false positives and unnecessary maintenance actions. Additionally, by integrating the maintenance alert with aircraft health monitoring systems, the method facilitates automated responses, enhancing the overall reliability and safety of aircraft operations. The system's adaptability to various environmental conditions and operational modes ensures consistent performance across different flight profiles, making this a robust solution for conditional predictive maintenance in the aviation industry.

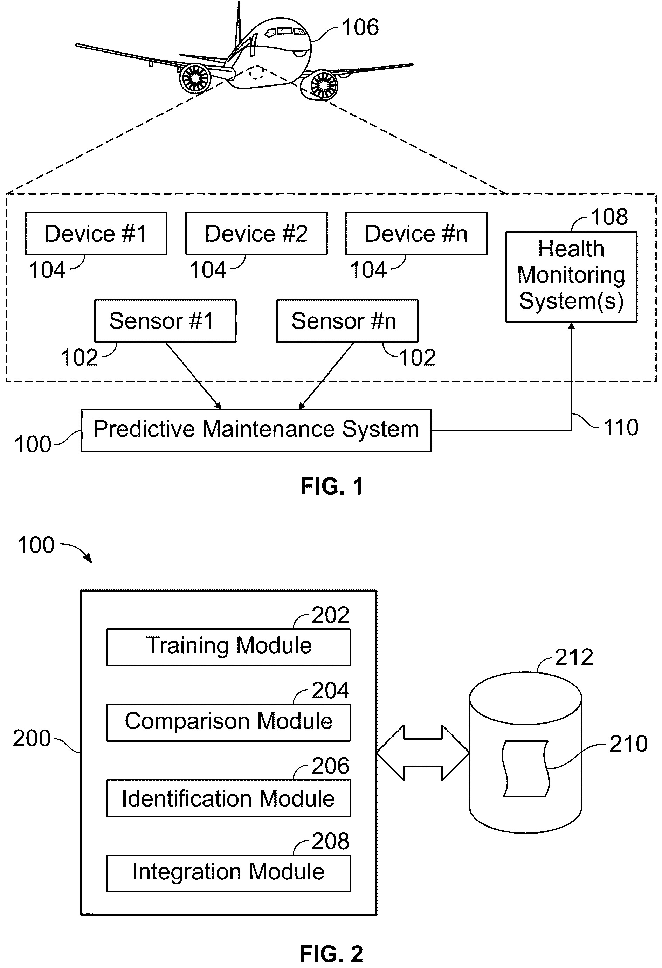

Figure 1 illustrates one example of a conditional predictive maintenance system 100. The conditional predictive maintenance system 100 provides a comprehensive framework designed to enhance the reliability and efficiency of aircraft operations by utilizing the machine learning-based surrogate models. This conditional predictive maintenance system 100 provides a structured approach to conditional predictive maintenance by integrating various components that work in tandem to monitor, analyze, and predict the operational state of aircraft devices 104. The conditional predictive maintenance system 100 can receive operational data, process this data through surrogate models, and generate maintenance alerts based on the analysis of predicted versus actual operational outputs.

The sensors 102 serve as data collection points for operational parameters of the aircraft devices 104. While two sensors 102 are shown ("Sensor #1" and "Sensor #n"), there may be many more sensors 102, such as dozens, hundreds, or thousands of sensors 102 providing different operational data to the conditional predictive maintenance system 100. These sensors 102 can be located throughout the aircraft 106 to capture a wide range of data, including temperatures, pressures, altitudes, mass flows, vibrations, electric currents, and voltage measurements.

The sensors 102 and/or aircraft devices themselves in the conditional predictive maintenance system can collect or provide a wide range of operational data from the aircraft. Examples of sensors 102 include temperature sensors that measure temperatures of various components and systems within the aircraft 106, such as engines, hydraulic systems, and cabin environments; pressure sensors that measure the pressure in different systems, such as hydraulic lines, fuel systems, and cabin pressurization; altitude sensors that provide data on the altitude of the aircraft 106; mass flow sensors that measure the flow of air through various systems, such as the engines and environmental control systems; vibration sensors that detect vibrations in mechanical components, such as engines and landing gear; electrical current sensors that measure the electrical current flowing through different circuits and components; voltage sensors that measure the voltage levels in electrical systems; and the like. By utilizing these sensors 102, the conditional predictive maintenance system 100 can gather comprehensive data on the operational parameters indicative of the operational state of the aircraft 106.

The operational data can be collected in a time series format by capturing and recording data points at successive intervals over time. This allows for analysis of trends, patterns, and changes in the data. In the context of the conditional predictive maintenance system 100, time series data collection can involve repeated or continuous monitoring. Sensors 102 installed on various aircraft devices 104 can repeatedly or continuously monitor and record operational parameters such as temperature, pressure, altitude, mass flow, vibrations, electrical current, and voltage. Optionally, the devices 104 themselves can output the operational data, which can include aircraft component position commands, component position commands or position indications, component power commands, or the like. The sensors 102 can be strategically placed to capture data from critical components and systems throughout the aircraft 106. The data points collected by the sensors 102 can be associated with specific timestamps that indicate the time at which the measurement was taken. This timestamping can be useful for creating a chronological sequence of data points that enables the analysis of how operational parameters of the devices 104 change over time. The conditional predictive maintenance system 100 can processes the time series of operational data using machine learning-based surrogate models to predict operational outputs and identify deviations from expected behavior. This processing allows for detection or prediction of anomalies and potential faults (when compared with post-mission analysis of the operational data).

This can enable accurate predictions and timely maintenance interventions of devices 104 of the aircraft 106 that are trending toward failure, but have not yet failed. Such early prediction of failure or deterioration of a device 104 can provide several significant benefits, including minimized or reduced downtime of the aircraft 106; cost savings as planned maintenance can be performed in a more cost-effective manner than emergency repairs; enhanced safety by predicting failures before failures occur; improved maintenance scheduling by better planning and coordinating maintenance to ensure that resources and personnel are available when needed; extended device life by addressing issues before the issues lead to significant damage that could shorten the lifespan of aircraft devices 104; improved reliability by consistent monitoring and early intervention of issues with devices 104 to improve the overall reliability of the aircraft 106; data-driven insights into the performance and wear patterns of aircraft devices 104; and the like. The data collected by the sensors 102, aircraft devices 104, and/or memory can be used for training the surrogate models, as the data provides the inputs necessary for accurate prediction of device performance. The sensors 102 can operate under various environmental conditions, ensuring that the data provided by the sensors 102 are reliable and comprehensive.

The system 100 can generate maintenance alerts 110 responsive to identification or detection of deviations between the modeled output and the actual output of aircraft devices 104. The system 100 evaluates the predicted outputs from the surrogate models against the actual outputs from the aircraft devices 104. This comparison is used to identify deviations that may indicate potential anomalies or faults. When a deviation is detected, the system 100 analyzes the discrepancy to determine the significance. This analysis considers environmental and operational variations to distinguish between noise and genuine anomalies. The system 100 assesses whether the deviation is indicative of a maintenance need. For example, minor or small deviations may not indicate impending or predicted failure of a device 104. Larger or more significant deviations, on the other hand, may indicate impending or predicted failure of the device 104.

If the analysis concludes that the deviation represents a potential fault or anomaly (or an upcoming fault or anomaly), the conditional predictive maintenance system 100 generates a maintenance alert 110. This alert 110 is configured to prompt the scheduling of maintenance activities for the affected device, ensuring timely intervention. The maintenance alert 110 can be communicated to the aircraft's health monitoring systems 108, which are responsible for implementing responsive actions. These actions may include shutting down the affected device, operating it in a reduced capacity, or scheduling repairs. The integration of the conditional predictive maintenance system 100 with the health monitoring systems 108 allows for automated responses to the maintenance alert 110, enhancing the overall reliability and safety of aircraft operations.

The health monitoring systems 108 in the conditional predictive maintenance framework can integrate with the conditional predictive maintenance system 100 to ensure the ongoing reliability and safety of aircraft operations. The health monitoring systems 108 can include or represent airplane health management (AHM) systems that monitor the health of various aircraft systems and components to provide real-time data and alerts to maintenance crews; airplane condition monitoring systems (ACMS) that collect and analyze data from various sensors 102 and devices 104 on the aircraft 106 to monitor operational statuses; engine health monitoring (EHM) systems that monitor the health and performance of aircraft engines; structural health monitoring (SHM) systems that monitor the structural integrity of the aircraft 106; integrated vehicle health management (IVHM) systems that monitor the health of the entire aircraft 106; flight data monitoring (FDM) systems that analyze flight data to identify trends and anomalies in performance of the aircraft 106; and the like. The maintenance alerts 110 received by one or more of these health monitoring systems 108 can cause the systems 108 to perform responsive actions, such as scheduling repair or replacement of a device 104, shutting the device 104 down or off (e.g., deactivating the device 104), changing a flight plan (e.g., to reduce usage of or load placed onto the device 104, etc.), or the like. The maintenance alerts 110 can be customized based on the severity or type of detected anomaly. This customization allows for prioritization of alerts, ensuring that critical issues are addressed first. The system 100 can categorize alerts based on factors such as the potential impact on safety, operational efficiency, and maintenance costs.

Figure 2 illustrates one example of a processing unit 200 of the conditional predictive maintenance system 100. The conditional predictive maintenance system 100 also can be referred to as a machine learning-based surrogate model system 100. The system 100 represents a comprehensive framework designed to enhance the conditional predictive maintenance capabilities of aircraft devices 104. The system 100 is responsible for receiving operational data, processing this data through machine learning models, and generating maintenance alerts 110 based on the analysis of operational outputs. The system 100 integrates multiple modules that work in concert to examine the operation of aircraft devices 104, compare predicted outputs with actual outputs, and identify potential anomalies or faults.

The conditional predictive maintenance system 100 includes a processing unit 200 that represents hardware circuitry that includes and/or is connected with one or more processors. The processing unit 200 in the conditional predictive maintenance system 100 can represent various types of processors, each suited to handle the complex computations required for real-time data processing and machine learning tasks. Examples of different types of processors that the processing unit 200 can represent include one or more central processing unit (CPU), graphics processing units (GPU), field-programmable gate arrays (FPGA), application-specific integrated circuits (ASIC), digital signal processors (DSP), tensor processing units (TPU), or the like.

The processing unit 200 operates as the central hub for data processing and analysis, coordinating the activities of the various modules within the system 100. The processing unit 200 can be responsible for executing the machine learning algorithms that power surrogate models 210, enabling the surrogate models 210 to process operational data and predict operational outputs of the devices 104. The processing unit 200 interfaces with the sensors 102 on the aircraft 106 to receive data and utilizes this data to train and refine the surrogate models 210. Optionally, the data can be recorded in a memory 212 (described below) during flight and later used (e.g., after the flight) to predict failure of faults of aircraft devices 104. The processing unit 200 is equipped with the computational resources necessary to handle the complex calculations involved in conditional predictive maintenance, ensuring that the system 100 can operate efficiently and effectively in real-time.

A module in the context of hardware refers to a distinct, self-contained unit within the processing unit 200 that performs specific functions. The training module 202 focuses on the development and refinement of the surrogate models 210. This module 202 can receive operational parameters from the sensors 102 and use these parameters to train the surrogate models 210. The training module 202 can employ advanced machine learning techniques, such as recurrent neural networks (RNNs), convolutional neural networks (CNNs), and transformers, to handle the time-series data from the sensors 102. By continuously or repeatedly updating the models 210 with new operational data, the training module 202 can ensure that the surrogate models 210 remain accurate and capable of predicting operational outputs under varying conditions.

The surrogate models 210 in the conditional predictive maintenance system 100 can be trained by the training module 202 through a structured process that involves collection, preprocessing, and analysis of operational data. The training involves the collection of operational data from various sensors 102 installed on the aircraft 106. These sensors 102 can gather a wide range of parameters, such as temperature, pressure, altitude, mass flow, vibrations, electrical current, and voltage, from different aircraft devices 104. The data can be collected through a variety of different (e.g., diverse) flight profiles and operational conditions. For example, the data used to train the models 210 can be collected during different flight plans for different aircraft 106, in different environmental conditions, and the like. The data used to train the models 210 can be obtained or collected by the sensors 102 during flights having no failures of components or systems onboard the aircraft 106. For example, the models 210 can be trained on normal flights with no anomalies involving any components of the aircraft 106.

The collected operational data can be preprocessed by the training module 202 to clean and normalize the data to eliminate or reduce noise and inconsistencies within the data. The training module 202 uses machine learning techniques to learn the complex relationships between the input parameters and the operational outputs of the aircraft devices 104 in the different flight profiles and operational conditions. During training of the models 210, the surrogate models 210 are exposed to the data from diverse flight profiles and operational conditions. The models 210 learn the behavior of the aircraft devices 104 by adjusting parameters of the models 210 to minimize or reduce the difference between the predicted and actual outputs of the devices 104. Advanced machine learning techniques, such as recurrent neural networks (RNNs), convolutional neural networks (CNNs), and transformers, can be used employed to handle the time-series data from the sensors 102. Once the surrogate models 210 are trained, the models 210 undergo validation and testing by the training module 202 using a separate dataset, such as real world data from aircraft 104, simulated data, or the like. This ensures that the models 210 can accurately predict operational outputs and identify deviations under various conditions. The surrogate models 210 can be repeatedly refined and retrained as new data becomes available. This ongoing process allows the models 210 to adapt to changes in operational conditions and improve the predictive accuracy of the models 210 over time. The training module 202 may incorporate feedback from a comparison module 204 and an identification module 206 (described below) to fine-tune the models 210 and improve performance of the models 210.

A memory 212 in the conditional predictive maintenance system 100 can store the models 210 and/or data from the sensors 102. The memory 212 can represent various types of computer memory, such as read-only memory (ROM), flash memory, one or more solid-state drives (SSD), hard disk drives (HDD), network-attached storage (NAS), or the like.

The comparison module 204 compares the predicted operational outputs with the actual outputs from the aircraft devices. This module is important in identifying deviations that may indicate potential anomalies or faults. By analyzing the differences between predicted and actual outputs, the comparison module 204 can detect discrepancies that suggest a maintenance need. The module 204 utilizes specified environmental conditions to distinguish between noise and actual anomalies, ensuring that the system 100 accurately identifies genuine issues that require attention.

The identification module 206 determines whether the deviations identified by the comparison module 204 are indicative of a maintenance need. This module 206 analyzes the deviations in the context of environmental and operational variations, distinguishing between noise and actual anomalies. By considering factors such as temperature, humidity, altitude, and operational context, the identification module 206 can accurately assess the significance of the deviations and decide whether the deviations warrant a maintenance alert. This module 206 helps ensure that the system 100 only generates alerts for genuine maintenance needs, reducing or minimizing false positives and unnecessary interventions.

The integration module 208 facilitates seamless integration of the conditional predictive maintenance system 100 with existing aircraft health monitoring systems 108. This module 208 generates maintenance alerts 110 based on the analysis conducted by the identification module 206. The alerts 110 are configured to prompt the scheduling of maintenance activities for the affected aircraft devices 104. By interfacing with aircraft health monitoring systems 108, the integration module 208 enables automated responses to maintenance alerts, enhancing the overall reliability and safety of aircraft operations. This module 208 ensures that the conditional predictive maintenance system 100 can provide predictions and alerts that support proactive maintenance scheduling. These predictions can be provided in real-time (e.g. during the same flight where the operational data is obtained) or over time (e.g., the operational data can be obtained and recorded, and later processed for making the prediction).

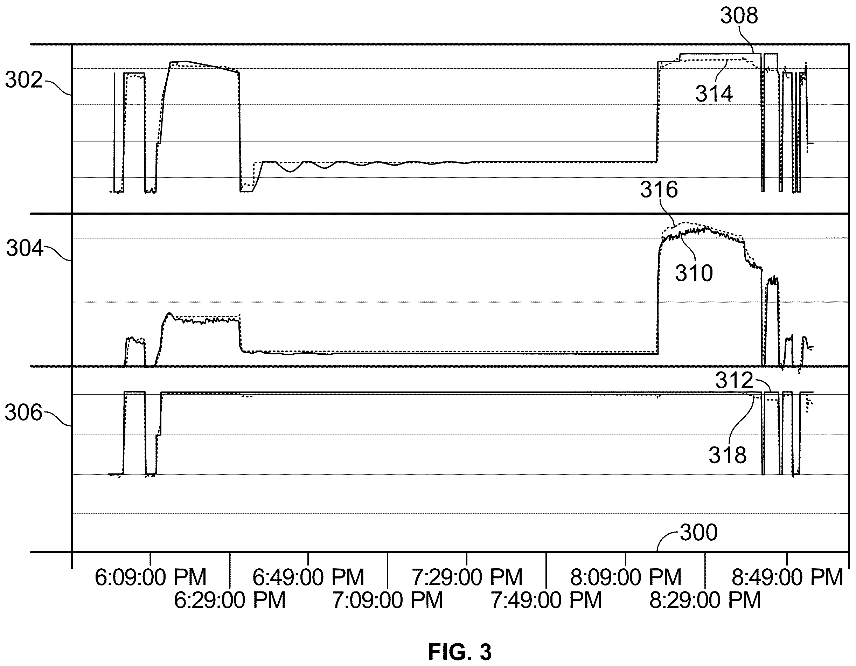

Figure 3 illustrates examples of predicted operational outputs 314, 316, 318 of different devices 104 onboard the aircraft 106 and actual operational outputs 308, 310, 312 of the same devices 104. The outputs 308, 310, 312, 314, 316, 318 are shown alongside a horizontal axis 300 indicative of time and different vertical axes 302, 304, 306.

The vertical axis 302 is used to plot the actual and predicted first signals 308, 314 of a device 104. The sensor(s) 102 can monitor signals conducted along signal buses, wires, cables, or the like, to read the actual power command outputs 308 by the device 104 as the outputs 314 are conducted along the signal buses, wires, cables, etc. The predicted outputs 314 can be output by the model 210 for this same device 104. The predicted outputs 314 can be predicted by the model 210 in a time series based on operational data.

The vertical axis 304 is used to plot the actual and predicted second outputs 310, 316 of a device 104. The sensor(s) 102 can monitor signals conducted along signal buses, wires, cables, or the like, to read the actual outputs 310 by the device 104 as signals indicative or controlling the signal outputs 310 are conducted along the signal buses, wires, cables, etc. This ensures that the actual outputs 310 are monitored in real time or in near real time, or in a time series. The predicted outputs 316 can be output by the model 210 for this same device 104. The predicted outputs 316 can be predicted by the model 210 in a time series based on operational data. Stated differently, the model 210 can receive the same operational data that the device 104 (e.g., one or more valves, fans, etc.) receives and predict how the device 104 should perform.

The vertical axis 306 is used to plot the actual and predicted signals or commands 312, 318 of a device 104. The sensor(s) 102 can monitor signals conducted along signal buses, wires, cables, or the like, to read the actual commands 312 by the device 104 as signals indicative or controlling the device 104 are conducted along the signal buses, wires, cables, etc. This ensures that the actual commands 312 are monitored in real time, or as recorded in a time series. The predicted commands 318 can be output by the model 210 for this same device 104. The predicted commands 318 can be predicted by the model 210 in a time series based on operational data. Stated differently, the model 210 can receive the same operational data that the device 104 receives and predict how the device 104 should perform.

As shown by each pair of the actual and predicted outputs 308, 314; 310, 316; and 312, 318, the system 100 is able to closely predict operation of the devices 104 over time. The predicted outputs 314, 316, 318 predominantly increase, decrease, and remain constant over the same time periods as the actual outputs 308, 310, 312. This indicates that the system 100 is able to closely predict actual operation of devices 104.

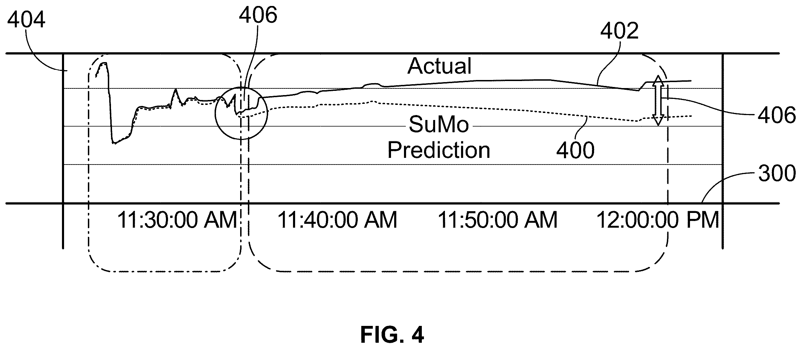

Figure 4 illustrates one example of the conditional predictive maintenance system 100 monitoring predicted and actual outputs 400, 402 of a device 104 to predict an upcoming fault or anomaly of the device 104. The predicted and actual outputs 400, 402 are shown alongside a vertical axis 404 indicative of different values of the outputs 400, 402 and the horizontal axis 300 representative of time. As described above, the predicted operational outputs 400 may be the output from the model 210 to predict operation of a device 104 while the actual operational outputs 402 can represent the actual outputs from the same device 104.

The comparison module 204 of the system 100 can monitor the time series of the operational outputs 400, 402 and compare the operational outputs 400 that are predicted by the surrogate model 210 with actual operational outputs 402 from the device 104 to identify one or more deviations 406. As shown, the deviations 406 can represent a difference in value between the outputs 400, 402. The deviations 406 can indicate a potential anomaly or fault in the device 104, or can indicate a trend in the device 104 toward an anomaly or fault.

The comparison module 204 can provide the deviations 406 to the identification module 206. The identification module 206 can determine (e.g., decide) whether the deviations 406 that are identified are indicative of a maintenance need for the device 104. For example, the identification module 206 can decide whether the deviations 406 are larger than a threshold amount, whether the deviations occur at more than a threshold rate or frequency, or the like. If the identification module 206 decides that the deviations 406 are larger than the threshold amount or occur more frequently than the threshold rate or frequency, the identification module 206 can decide that the deviations 406 indicate a trend toward failure or anomaly of the device 104.

The identification module 206 can send a signal to the integration module 208 to notify the integration module 208 that the deviations 406 indicate such an issue with the device 104. As described above, the identification module 206 can then generate a maintenance alert 110 that is communicated to one or more of the health monitoring systems 108. The conditional predictive maintenance system 100 can collect the operational data, predict the outputs from the devices 104 based on the operational data using the surrogate models 210, monitor the actual outputs from the devices 104, compare the modeled outputs from the models 210 with actual outputs from the devices 104, identify deviations 406 between the modeled outputs and the actual outputs, and decide whether the deviations 406 warrant responsive action before, during, and/or after flights of the aircraft 106.

In one example, the system 100 may perform these operations in real-time, such as while the aircraft 106 is flying. The operational data may be collected by monitoring (e.g., sampling, receiving a copy of, etc.) the signals output by the sensors 102 and/or devices 104 onto signal buses, wires, cables, or the like, within the aircraft 106. For example, the sensors 102 and/or devices 104 may output and conduct the operational data to devices 104 via the signal buses, wires, cables, or the like. In one embodiment, the comparison module 204 monitors, samples, or receives copies of this operational data conducted via the signal buses, wires, cables, or the like, in real time (as the operational data is conducted). Optionally, the comparison module 204 can obtain the operational data from the memory 212 where the operational data was previously obtained and recorded in the memory 212 for later analysis. The comparison module 204 can obtain the actual outputs of the devices 104 by monitoring (e.g., sampling, receiving a copy of, etc.) the signals output by the devices 104 onto signal buses, wires, cables, or the like, within the aircraft 106 as the signals are output and conducted by the devices 104. The comparison module 204 can then compare the actual outputs from the devices 104 with the modeled outputs from the surrogate models 210 and compare these outputs as the devices 104 generate the signals including the actual outputs (e.g., to other devices 104 and/or aircraft systems for controlling flight or other operations of the aircraft 106). If deviations 406 are found by the identification module 206 that require responsive action(s) by the health monitoring systems 108, then the integration module 208 may send signals to the health monitoring systems 108 in real-time, such as while the aircraft 106 is flying. This can allow for operations of the devices 104 associated with these deviations 406 to be modified during the same flight of the aircraft 106, such as by shutting down a device 104, changing operation of the device 104 (e.g., reducing loads placed on the device 104), or the like. These operations can be performed in real-time due to the conditional predictive maintenance system 100 operating faster than a pilot or other person could using their mind alone, or using pen and paper. Reliance on mental processes alone (with or without pen and paper) to perform these same operations is too complex to be performed in real time. For example, persons would be unable to process the operational data, model the outputs from the devices 104 based on the operational data, compare the modeled and actual outputs, and take responsive action if needed during the flight of the aircraft 106. Instead, considerably more time would be needed, which can pose a significant safety risk to the persons onboard the aircraft 106.

In one example, the processing unit 200 can operate as an artificial neural network (ANN). The processing unit 200 can perform algorithms that learn from training data using the models 210 as an ANN. The structure of such an ANN can be a series of layers, with each layer comprising one or more neurons arranged in one or more neuron arrays. A neuron may include a register, a microprocessor, and at least one input. Each neuron can produce an output, or activation, based on an activation function that uses the outputs of the previous layer and a set of weights as inputs. Each neuron in the neuron array may be connected to another neuron via a synaptic circuit. A synaptic circuit may include a memory for storing a synaptic weight. An exemplary ANN may be a deep neural network (DNN) having an input layer, an output layer, and a plurality of fully connected hidden layers. Each layer of the ANN or DNN may have a variety of number of neurons.

The ANN or DNN can be implemented by an application-specific integrated circuit (ASIC). For example, the processing unit 200 can be implemented by one or more ASICs. The ASICs may be specially customized for the specific artificial intelligence application described herein to provide superior computing capabilities and reduced electricity consumption compared to traditional processors or CPUs. In some embodiments, training data for the models 210 are generated by receiving continuous operational data at the processing unit 200 and using the processing unit 200 to discretize the continuous operational data.

In some embodiments, the continuous operational data may be received by the processing unit 200 remotely over a network formed by signal buses, wires, cables, etc., and/or wireless connections. The continuous operational data may include historical data, which the ANN or DNN can use to learn patterns to identify or detect potential anomalies in the devices 104. Continuous operational data can include data that is measured by the sensors 102 and/or output by the devices 104, and can have any number of possible values. Machine learning models 210 may benefit from being trained with discrete operational data rather than continuous operational data.

Discrete operational data can be counted and has a limited number of values. Any type of discretization method may be used to convert continuous operational data to discrete operational data, including binning, clustering, and numerical discretization. The ANN and models 210 can then be trained using training techniques to generate a trained neural network which can be used to detect the deviations 406 as anomalies, as described above. The trained ANN monitors incoming operational data to detect deviations 406. If the trained ANN detects one or more deviations 406, the ANN can additionally analyze the detected deviations 406 to generate anomaly data which can be output to a user, to the health monitoring systems 108 (e.g., as the alerts 110), and/or used to re-train the ANN (e.g., the model(s) 210). For example, the anomaly data may explain the type of anomaly or a cause of the anomaly with a device 104.

A backpropagation algorithm and a gradient descent algorithm may be used to train the neural network and/or models 210. Gradient descent is an optimization algorithm used to minimize differentiable real-valued multivariate functions. Gradient descent begins by initializing the values of parameters and then applying a gradient descent calculation, which uses mathematical calculations to iteratively adjust the values so they minimize a loss function to optimize the ANN or models 210. Backpropagation is the mathematical process of calculating the derivatives and gradient descent is the process of adjusting parameters of the models 210 using the calculated derivatives to minimize the loss function. Backpropagation is a mathematical calculation for supervised learning of ANNs using gradient descent. Given an ANN and an error function, backpropagation is used to calculate the gradient of the error function with respect to the neural network's weights.

Detection of the deviations 406 is an important task that impacts the aircraft industry. A difficulty in detection of the deviations 406 is that the system 100 must define the boundary between ordinary and anomalous data and accurately classify data as ordinary or anomalous (e.g., deviations 406). The line between ordinary and anomalous data may be difficult to determine with cases approaching a boundary and based on an application-specific domain. For example, small variations may trigger an identification of a deviation 406 for some devices 104 while relatively larger deviations 406 may be considered normal in less sensitive applications involving devices 104. This subject matter described herein provides solutions for using a trained ANN to quickly and accurately identify deviations 406 in operation of devices 104 as compared to anomaly detection performed using traditional methods (e.g., physics model-based methods).

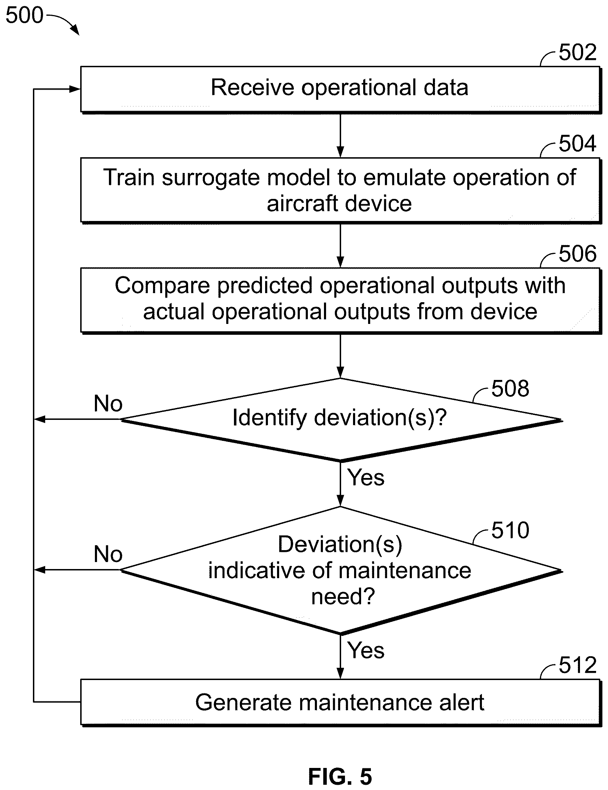

Figure 5 illustrates a flowchart of one example of a method 500 of identifying deviations in operation of a device of an aircraft using a surrogate model of the device. The method 500 can provide for conditional predictive maintenance in aircraft systems, utilizing machine learning-based surrogate models to enhance the detection of anomalies and the scheduling of maintenance activities. The method 500 can process operational data from various sensors and/or aircraft devices, enabling monitoring and/or prediction of operational outputs of aircraft devices. The method 500 can represent operations performed by the conditional predictive maintenance system 100.

At 502, operational data is received from sensors 102 installed on the aircraft 106 and/or from the aircraft devices 104. The operational data can represent a wide range of operational parameters, including temperatures, pressures, altitudes, mass flows, vibrations, electric currents, and voltage measurements. The mass flow can be a measurement of the amount of fluid mass passing through a cross-sectional area per unit of time. This measurement can be performed for fluids such as air, nitrogen enriched air, fuel, or the like. The operational data provides input for the surrogate models 210 as the necessary information to predict operation of aircraft devices 104. The data can be collected in real-time and/or stored in memory 212 for later processing, ensuring that the surrogate models 210 have access to the most current operational conditions of the aircraft devices 104.

At 504, a surrogate model 210 is trained to predict the operation of an aircraft device 104 and/or predict upcoming operation of the aircraft device 104. The surrogate model 210 is a machine learning-based construct designed to replicate the behavior of specific aircraft devices 104 under various operational conditions. Training involves using historical and real-time operational data to teach the model 210 the complex relationships between different operational parameters and the expected outputs of the aircraft devices 104. Advanced machine learning techniques, such as RNNs, CNNs, and transformers can be employed to handle the time-series nature of the operational data. The trained surrogate model 210 can process additional operational data to accurately predict the operational outputs of the aircraft devices 104 when the devices 104 are operating normally and/or not trending toward anomalies.

At 506, the predicted operational outputs are compared with the actual operational outputs from the aircraft device 104. At 508, this comparison is used for identifying deviations that may indicate potential anomalies or faults in the aircraft devices 104. The predictions from the model 210 can be juxtaposed with the operational data from the aircraft devices 104, such as real-time data, previously recorded signals processed in time for use in the prediction, inputs and/or outputs from components, systems, aircraft devices 104, etc. This allows for detection of discrepancies or deviations 406 that could signify underlying issues or trends toward failure. This step can be used to distinguish between typical operational variations and genuine anomalies that require attention. If one or more deviations 406 are identified at 508, flow of the method 500 can proceed toward 510. Otherwise, flow of the method 500 can return to another operation (e.g., 502) or can terminate.

At 510, an assessment is made as to whether the deviations 406 are indicative of a maintenance need. This decision involves analyzing the deviations 406 in the context of environmental and operational variations to differentiate between noise and actual anomalies. The analysis considers factors such as temperature, humidity, altitude, flight phase, and aircraft speed to ensure that the identified deviations are not merely artifacts of changing conditions but are indeed indicative of potential faults or failures. If the deviations 406 are determined to be indicative of a maintenance need, the method 500 can proceed to generate a maintenance alert at 512. This alert 110 can prompt the scheduling of maintenance activities for the affected aircraft devices 104. The maintenance alert 110 can be integrated with existing aircraft health monitoring systems 108. This can facilitate automated responses and ensuring timely interventions. The alert 110 can be generated in real-time, or can be generated or provided after a delay. By providing alerts based on the severity and type of anomalies detected, the method 500 enhances the reliability and safety of aircraft operations, reducing the likelihood of unforeseen failures and minimizing operational disruptions. If the deviations 406 do not indicate a need for maintenance, flow of the method 500 can return to another operation (e.g., 502) or can terminate.

Also provided are the following illustrative, non-exhaustive examples of the subject-matter encompassed herein, which relate to:
A method for conditional predictive maintenance in aircraft devices or systems using machine learning-based surrogate models, the method comprising: receiving operational data from sensors and/or aircraft devices on an aircraft, the operational data including operational parameters used by the aircraft devices for operational functions of the aircraft; training a surrogate model to process additional operational data to predict operational outputs of the at least one of the aircraft devices; comparing the operational outputs that are predicted by the surrogate model with actual operational outputs from the at least one aircraft device to identify one or more deviations, the one or more deviations indicating a potential anomaly or fault in the at least one aircraft device; determining whether the one or more deviations that are identified are indicative of a maintenance need by analyzing the one or more deviations in a context of environmental and operational variations to distinguish between noise and actual anomalies; and generating a maintenance alert responsive to the one or more deviations being determined to be indicative of the maintenance need, the maintenance alert configured to prompt scheduling of maintenance activities for the one or more aircraft devices.

The method described in the immediately preceding paragraph, wherein the operational parameters include one or more temperatures, pressures, altitudes, mass flows, measured vibrations, electric current, or voltage measurements.

The method described in the first of the two immediately preceding paragraphs, wherein the surrogate model is trained using advanced machine learning techniques, including one or more recurrent neural networks (RNNs), convolutional neural networks (CNNs), or transformers to handle time-series of the operational data.

The method described in the first of the three immediately preceding paragraphs, wherein the one or more deviations are identified based on specified environmental conditions to distinguish between the noise and the actual anomalies.

The method described in the immediately preceding paragraph, wherein the specified environmental conditions include one or more of temperature, humidity, altitude, or operational context including flight phase and aircraft speed.

The method described in the first of the five immediately preceding paragraphs, wherein the surrogate model is trained to predict the operational outputs using permutation feature importance techniques or Shapley values to identify most relevant signals in the operational data for predicting the operational outputs.

The method described in the first of the six immediately preceding paragraphs, wherein the maintenance alert is generated based on a severity or a type of the actual anomalies that are distinguished from the noise, and further comprising: integrating the maintenance alert with one or more aircraft health monitoring systems for generating an automated response to the maintenance alert.

The method described in the first of the two immediately preceding paragraphs, further comprising: preprocessing and filtering the additional operational data to clean and normalize the additional operational data before use by the surrogate model to predict the operational outputs.

A conditional predictive maintenance system for conditional predictive maintenance in aircraft systems using machine learning-based surrogate models, the conditional predictive maintenance system comprising: sensors configured to collect operational parameters used by aircraft devices for operational functions of the aircraft; a processing unit having: a training module configured to receive the operational parameters from the sensors and train a surrogate model using the operational parameters to predict operation of at least one of the aircraft devices, the surrogate model trained to process additional operational data to predict operational outputs of the at least one of the aircraft devices; a comparison module configured to compare the operational outputs that are predicted by the surrogate model with actual operational outputs from the at least one aircraft device to identify one or more deviations, the one or more deviations indicating a potential anomaly or fault in the at least one aircraft device or another aircraft device or system; an identification module configured to determine whether the one or more deviations that are identified are indicative of a maintenance need by analyzing the one or more deviations in a context of environmental and operational variations to distinguish between noise and actual anomalies; and an integration module configured to generate a maintenance alert responsive to the one or more deviations being determined to be indicative of the maintenance need, the maintenance alert configured to prompt scheduling of maintenance activities for the one or more aircraft devices.

The conditional predictive maintenance system described in the immediately preceding paragraph, wherein the operational parameters collected by the sensors include one or more temperatures, pressures, altitudes, mass flows, measured vibrations, electric current, or voltage measurements.

The conditional predictive maintenance system described in the first of the two immediately preceding paragraphs, wherein the training module is configured to train the surrogate model using advanced machine learning techniques, including one or more recurrent neural networks (RNNs), convolutional neural networks (CNNs), or transformers to handle time-series of the operational data.

The conditional predictive maintenance system described in the first of the three immediately preceding paragraphs, wherein the comparison module is configured to identify the one or more deviations based on specified environmental conditions to distinguish between the noise and the actual anomalies.

The conditional predictive maintenance system described in the immediately preceding paragraph, wherein the specified environmental conditions include one or more of temperature, humidity, altitude, or operational context including flight phase and aircraft speed.

The conditional predictive maintenance system described in the first of the five immediately preceding paragraphs, wherein the training module is configured to train the surrogate model to predict the operational outputs using permutation feature importance techniques or Shapley values to identify most relevant signals in the operational data for predicting the operational outputs.

The conditional predictive maintenance system described in the first of the six immediately preceding paragraphs, wherein the integration module is configured to generate the maintenance alert based on a severity or a type of the actual anomalies that are distinguished from the noise, the integration module configured to integrate the maintenance alert with one or more aircraft health monitoring systems for generating an automated response to the maintenance alert.

The conditional predictive maintenance system described in the immediately preceding paragraph, wherein the training module is configured to preprocess and filter the additional operational data to clean and normalize the additional operational data before use by the surrogate model to predict the operational outputs.

A conditional predictive maintenance system for an aircraft, the conditional predictive maintenance system comprising: a machine learning-based surrogate model system configured to receive operational data from aircraft sensors and/or aircraft devices, the operational data including one or more of temperature, pressure, altitude, and mass flow, wherein the surrogate model system is trained to mimic operation of the aircraft devices, wherein the surrogate model system is further configured to process the operational data to predict maintenance needs by identifying anomalies and deviations from expected operational behavior of the aircraft devices, wherein the surrogate model system is configured to handle noisy data and distinguish between actual anomalies and environmental noise, wherein the surrogate model system is trained to be robust against variations in environmental conditions and operational modes to provide consistent anomaly detection across different flight profiles and conditions; and an integration module configured to interface the surrogate model system with existing aircraft systems to provide real-time predictions and alerts for maintenance needs, thereby facilitating proactive maintenance scheduling and reducing the likelihood of system failures.

The conditional predictive maintenance system described in the immediately preceding paragraph, wherein the machine learning-based surrogate model system utilizes recurrent neural networks (RNNs), convolutional neural networks (CNNs), or transformers to handle time-series data from the aircraft sensors.

The conditional predictive maintenance system described in the first of the two immediately preceding paragraphs, wherein the surrogate model system uses permutation feature importance techniques or Shapley values to identify relevant signals in the operational data for predicting maintenance needs.

The conditional predictive maintenance system described in the first of the three immediately preceding paragraphs, wherein the surrogate model system is configured to use anomaly detection algorithms to distinguish between noise and actual anomalies in the operational data using statistical methods or clustering techniques.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the appended claims, and can include other examples that occur to those skilled in the art. Such other examples are intended to be within the scope of the appended claims.

## Claims

1. A method (500) for conditional predictive maintenance in aircraft devices (104) using machine learning-based surrogate models, the method (500) comprising:
receiving operational data from one or more sensors (102), the aircraft devices (104) on an aircraft (106), or a memory (212), the operational data including operational parameters used by the aircraft devices (104) for operational functions of the aircraft (106);
training a surrogate model (210) to predict operation of at least one of the aircraft devices (104), the surrogate model (210) configured to process additional operational data to predict operational outputs of the at least one of the aircraft devices (104);
comparing the operational outputs that are predicted by the surrogate model (210) with actual operational outputs (308, 310, 312) from the at least one aircraft device to identify one or more deviations (406), the one or more deviations (406) indicating a potential anomaly or fault in the at least one aircraft device;
determining whether the one or more deviations (406) that are identified are indicative of a maintenance need by analyzing the one or more deviations (406); and
generating a maintenance alert (110) responsive to the one or more deviations (406) being determined to be indicative of the maintenance need, the maintenance alert (110) configured to prompt scheduling of maintenance activities for the one or more aircraft devices (104).

2. The method (500) of claim 1, wherein the operational parameters include one or more temperatures, pressures, altitudes, mass flows, measured vibrations, electric current, or voltage measurements.

3. The method (500) of claim 1, wherein the surrogate model (210) is trained using advanced machine learning techniques, including one or more recurrent neural networks (RNNs), convolutional neural networks (CNNs), or transformers to handle time-series of the operational data.

4. The method (500) of claim 1, wherein the one or more deviations (406) are identified based on specified environmental conditions to distinguish between noise and the actual anomalies.

5. The method (500) of claim 4, wherein the specified environmental conditions include one or more of temperature, humidity, altitude, or operational context including flight phase and aircraft speed.

6. The method (500) of claim 1, wherein the surrogate model (210) is trained to predict the operational outputs using permutation feature importance techniques or Shapley values to identify most relevant signals in the operational data for predicting the operational outputs.

7. The method (500) of claim 1, wherein the maintenance alert (110) is generated based on a severity or a type of the actual anomalies that are distinguished from noise, and further comprising:
integrating the maintenance alert (110) with one or more aircraft health monitoring systems (108) for generating an automated response to the maintenance alert (110).

8. The method (500) of claim 6, further comprising:
preprocessing and filtering the additional operational data to clean and normalize the additional operational data before use by the surrogate model (210) to predict the operational outputs.

9. A conditional predictive maintenance system (100) for an aircraft (106), the conditional predictive maintenance system (100) comprising:
a machine learning-based surrogate model system configured to receive operational data from one or more aircraft sensors (102), aircraft devices (104), or a memory (212), the operational data including one or more of temperature, pressure, altitude, and mass flow, wherein the surrogate model (210) system is trained to mimic operation of the aircraft devices (104), wherein the surrogate model (210) system is further configured to process the operational data to predict maintenance needs by identifying anomalies and deviations (406) from expected operational behavior of the aircraft devices (104), wherein the surrogate model (210) system is configured to handle noisy data and distinguish between actual anomalies and environmental noise, wherein the surrogate model (210) system is trained to be robust against variations in environmental conditions and operational modes to provide consistent anomaly detection across different flight profiles and conditions; and
an integration module configured to interface the surrogate model (210) system with existing aircraft systems to provide real-time predictions and alerts for maintenance needs, thereby facilitating proactive maintenance scheduling and reducing a likelihood of system failures.

10. The conditional predictive maintenance system (100) of claim 9, further comprising:
sensors (102) configured to collect operational parameters used by aircraft devices (104) for operational functions of the aircraft (106);
wherein the machine learning-based surrogate model system comprises:
a training module (202) configured to receive the operational parameters from the sensors (102) and train a surrogate model (210) using the operational parameters to predict operation of at least one of the aircraft devices (104), the surrogate model (210) trained to process additional operational data to predict operational outputs of the at least one of the aircraft devices (104) or another of the aircraft devices (104);
a comparison module (204) configured to compare the operational outputs that are predicted by the surrogate model (210) with actual operational outputs (308, 310, 312) from the at least one aircraft device to identify one or more deviations (406), the one or more deviations (406) indicating a potential anomaly or fault in the at least one aircraft device;
an identification module (206) configured to determine whether the one or more deviations (406) that are identified are indicative of a maintenance need by analyzing the one or more deviations (406) in a context of environmental and operational variations to distinguish between noise and actual anomalies.

11. The conditional predictive maintenance system (100) of any of claims 9 and 10, wherein the integration module (208) is comprised in the machine learning-based surrogate model, and is configured to generate a maintenance alert (110) responsive to the one or more deviations (406) being determined to be indicative of the maintenance need, the maintenance alert (110) configured to prompt scheduling of maintenance activities for the one or more aircraft devices (104).

12. The conditional predictive maintenance system (100) of any of claims 9 to 11, further configured to implement a method according to any of claims 2 to 8.
